Europäisches Patentamt

European Patent Office

Office européen des brevets

(11) Publication number: **0 042 301**
**B1**

(12) **EUROPEAN PATENT SPECIFICATION**

(45) Date of publication of patent specification: **03.10.84**

(21) Application number: **81302703.4**

(22) Date of filing: **16.06.81**

(51) Int. Cl.³: **B 01 D 46/10,** C 04 B 21/00,
B 01 D 29/20

(54) **Ceramic honeycomb filters and the production thereof.**

(30) Priority: **16.06.80 JP 80108/80**

(43) Date of publication of application:
**23.12.81 Bulletin 81/51**

(45) Publication of the grant of the patent:
**03.10.84 Bulletin 84/40**

(84) Designated Contracting States:
**BE DE FR GB IT SE**

(56) References cited:
**DE-A-2 248 359**
**DE-B-1 097 344**
**FR-A-1 515 158**
**US-A-3 458 977**
**US-A-3 885 977**
**US-A-3 899 326**
**US-A-3 938 959**
**US-A-4 041 592**
**US-A-4 178 145**

(73) Proprietor: **NGK INSULATORS, LTD.**
**2-56, Suda-cho, Mizuho-ku**
**Nagoya-shi, Aichi 467 (JP)**

(72) Inventor: **Higuchi, Noboru**
**7-313, Aza-Omoteyama Yagoto**
**Tenpaku-Cho Tenpaku-Ku Nogoya City (JP)**
Inventor: **Ogawa, Yutaka**
**1918, Ohaza-Hira Yamada-cho**
**Nishi-ku Nagoya City (JP)**
Inventor: **Asami, Seiichi**
**1-110, Aza-Kamitokosafu**
**Motojuku-Cho Okazaki City (JP)**
Inventor: **Totoki, Takao**
**74, Yamazato-Cho**
**Showa-Ku Nagoya City (JP)**

(74) Representative: **Whalley, Kevin et al**
**Marks & Clerk 57/60 Lincoln's Inn Fields**
**London WC2A 3LS (GB)**

Courier Press, Leamington Spa, England.

## Description

The present invention relates to filters, for example for removing fine particles contained in exhaust gases, and more particularly to ceramic honeycomb filters. Such filters are disclosed in EP—A—36321 (corresponds to European patent application number 81301091.5 which claims the priority 15.03.80 YP33202/80) published on 23.9.81.

Filters depend for their effect upon filter media such as steel wool, ceramic fibres, porous porcelains and the like and in filters intended to remove fine particles filter media of fine mesh or pore size have to be employed but the use of such filter media leads to an increase in pressure drop when a high filtration rate is required. To overcome this problem the area of the filter may be increased and thus in the case of the prior sheet-form, plate-form or cylindrical filters, relatively simple structures, such as a corrugated structure or a double cylindrical form are employed to increase the filter area but this does not lead to a marked increase in filter area per unit volume. Therefore, in order to avoid high pressure drop, it is necessary to use fairly large filters and it is very difficult to obtain comparatively small filters.

Honeycomb bodies have recently been used as catalyst supports for catalytically purifying exhaust gases in automobiles and as heat exchangers for gas turbines and the like.

A honeycomb body comprises a body of a material, such as a ceramic material, having a large number of generally parallel channels extending through the body from one end face thereof to an opposite end face and separated by thin walls. As a result the pressure drop or resistance to gas flow is small and since the surface area per unit volume is high and the channels are defined by thin walls, the body can be heated by using only a small amount of heat. In such ceramic honeycomb bodies, the thin partition walls defining the channels have been used as pipes to conduct a gas therealong, for example to react with catalyst coated onto the walls to convert harmful gases, such as carbon monoxide, hydrocarbons and nitrogen oxides, in exhaust gases thereby to purify the exhaust gases.

Such a honeycomb body has a thin wall thickness and has a large surface area per unit volume and it is an object of this invention to use such a honeycomb structural body as a filter. Thus, by sealing one end of given channels in a honeycomb body composed of a porous ceramic material and having a large number of channels and sealing the other ends of the remaining channels, a compact ceramic filter capable of removing fine particles and having a low pressure drop, in which the thickness of the filter is much less than that of a conventional ceramic filter and the available filter area can be enlarged, can be provided.

The present invention in one aspect provides a ceramic honeycomb filter which comprises a ceramic honeycomb body having a plurality of channels extending from one end face of the body to the other end face thereof, wherein ceramic sealing members shaped by means of a press die or an extrusion die are fitted to the said end faces of the ceramic honeycomb body, which sealing members each have sealing portions, and wherein the sealing portions of one sealing member block given channels at one end face of the ceramic honeycomb body and do not block opening portions of the remaining channels at the same one end face, and the sealing portions of the other sealing member block the remaining channels at the other end face of the body and do not block opening portions of the given channels at the same other end face.

The invention in another aspect provides a method for producing a ceramic honeycomb filter, comprising fitting a ceramic sealing member shaped by means of a press die or an extrusion die to each of both end faces of a ceramic honeycomb main body having a plurality of channels extending from one end face to the other end face thereof, which sealing members each have sealing portions, such that the sealing portions of one sealing member block given channels at one end face of the ceramic honeycomb body and do not block opening portions of the remaining channels at the same one end face, and the sealing portions of the other sealing member block the remaining channels at the other end face of the body and do not block opening portions of the given channels at the same other end face.

Preferably the sealing members are adhered to each end face of the ceramic honeycomb body with an adhesive, which is preferably an organic adhesive, a glass material or a ceramic material.

The invention will be further described, by way of example only, with reference to the accompanying drawings, wherein:

Figure 1 is an end view of one embodiment of a honeycomb body shown in Figure 2;

Figure 2 is a side view, partially in section, of the honeycomb body shown in Figure 1;

Figure 3 is a perspective view of a ceramic honeycomb filter according to the present invention;

Figure 4 is an exploded perspective view of the ceramic honeycomb filter shown in Figure 3;

Figure 5 is a schematic cross-section taken on the line V—V in Figure 3;

Figure 6 is an enlarged view of an essential part of a partition wall in Figure 5;

Figure 7 is an enlarged view of an essential part of a die for extruding a sealing member; and

Figure 8 is an enlarged cross-sectional view taken on the line VIII—VIII in Figure 7.

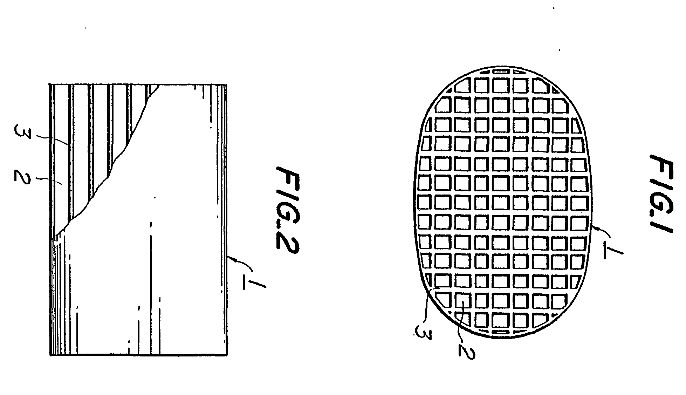

Figures 1 and 2 show one embodiment of a honeycomb body 1 in which a large number of parallel channels 2 of tetragonal cross-section extend therethrough and each channel is defined by thin partition walls 3.

Various methods may be used to produce ceramic honeycomb bodies; for example a paper dipping process wherein an organic porous sheet is impregnated with a ceramic slurry and a honeycomb structural body is formed and the formed body is fired; a pipe binding process wherein a large number of pipes of given cross-section are bound or bonded together; an extrusion process wherein raw material is extruded through a die provided with a large number of given shaped slits; and a press process. In more detail, in an extrusion process, finely powdered ceramic raw material, such as alumina, silica, mullite, silicon carbide, silicon nitride and/or cordierite, is mixed with an organic binder and a plasticizer. The mixture is then kneaded to prepare a composition consisting mainly of ceramic raw material. This composition is then extruded through a die provided with a large number of slits, which forms channels of a given cross-section, such as triangular, tetragonal or hexagonal, to form a monolithic structure, and the shaped structure is dried and fired to give a porous ceramic honeycomb body.

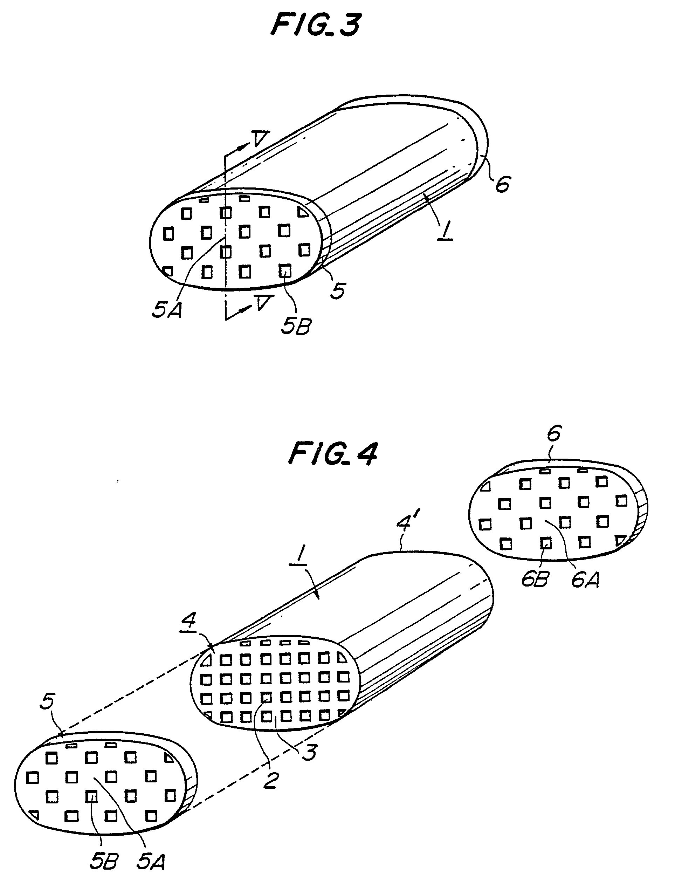

As shown in Figures 3 and 4 a ceramic honeycomb filter in accordance with the invention comprises a ceramic honeycomb body 1 having a plurality of channels 2 extending through the body from one end face 4 to another end face 4' of the body and separated by walls 3.

Ceramic sealing members 5 and 6, shaped by means of a press die or an extrusion die, are provided with sealing portions 5A and 6A which can block the channels in the honeycomb body 1 in a checker flag pattern, and which are fitted to each of faces 4 and 4' of the honeycomb body 1, so that the sealing portions 5A of the sealing member 5 block certain given channels 2 at one face 4 of the honeycomb body and do not block opening portions of the remaining channels at the face 4, and the sealing portions 6A of the other sealing member 6 block the remaining channels 2 at the other face 4' and do not block opening portions of the given channels at the face 4'. Each of sealing members 5 and 6 is further provided with openings 5B and 6B corresponding with channels at the end faces 4 and 4' not blocked by the sealing portions of the sealing members.

The term "sealing member" used herein means a member which blocks the channels of a honeycomb body with the sealing portion in a given pattern and the term "sealing portion" as used herein means the portion of the sealing member which blocks the channels.

The present invention utilises the thin porous partition walls 3 forming the channels as a filter by blocking the ends of the channels with the sealing portions of the sealing members.

When the sealing members are fitted to faces of the ceramic honeycomb body which is used as a filter, it is not always necessary to adhere or bond the ceramic honeycomb body to the sealing members but in order to prevent shifting of the honeycomb body relative to the sealing members, it is preferable to bond them together by using an organic adhesive, a glass material, a ceramic material or the like.

The pattern of the sealing portion of the sealing member is not limited to the checker flag pattern shown in Figure 3 but may be other patterns. Similarly, it is not necessary that the channels of the ceramic honeycomb body be tetragonal in cross-section they may be triangular, hexagonal or the like.

The cross-section shape of the ceramic honeycomb filter is not necessarily oval but may, for example, be circular or hexagonal.

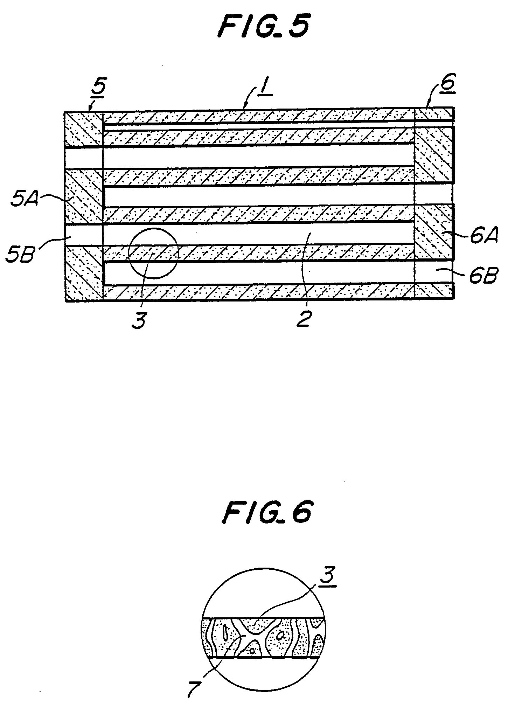

The operation of a filter according the present invention may be described by reference to Figures 5 and 6 of the drawings.

Figure 5 shows a schematic cross-sectional view taken on the line V—V in Figure 3 and Figure 6 is an enlarged view of the partition wall in Figure 5. In the ceramic honeycomb filter, certain channels 2 are blocked by sealing portions 5A of the sealing member 5 at face 4 of the body and the remaining channels are blocked by sealing portions 6A of the other sealing member 6 at face 4' of the body 1. Accordingly, a gas, such as an exhaust gas, supplied from one side flows into certain channels 2 of the body 1 through the openings 5B in the sealing member 5 and then flows into the adjacent channels 2 through the pores 7 in the partition walls 3 and is discharged from the openings 6B of sealing member 6. Thus, fine particles in the gas are removed, or filtered out, by the partition walls of the ceramic honeycomb structural main body 1.

The ceramic honeycomb filters of the present invention may be manufactured from ceramic materials of various qualities and properties depending upon the intended end use of the filter. For example, when thermal shock resistance is required, cordierite, silicon nitride, silicon carbide and the like, which have a low coefficient of thermal expansion, are preferably employed, and when a very high heat resistance is required, mullite, alumina, zirconia and the like are preferably used.

The ceramic honeycomb body and the sealing members are usually preferred to be formed of the same material but this is not necessary, and the materials may differ depending on the intended end use of the filter.

For example, when heat resistance and corrosion resistance are required only at a position relatively near one end surface of the filter, a material having the necessary properties is used only for the sealing member and the ceramic honeycomb structural main body may be manufactured of a material having other properties. The filtering function of the present invention is principally effected by the partition walls of the ceramic honeycomb body and it is not always necessary that the sealing members be of a porous material.

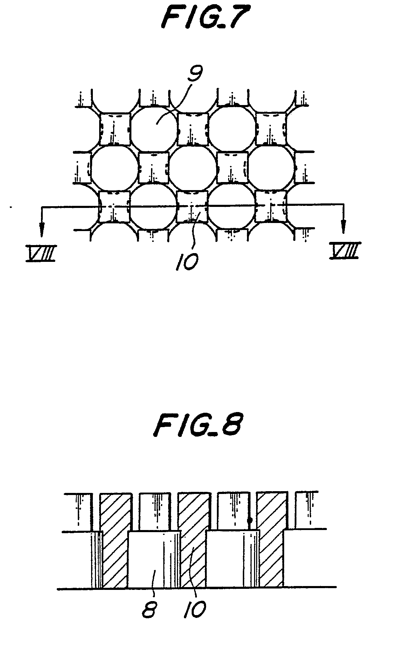

A filter of the invention is formed by first producing the ceramic honeycomb body and the sealing members in an unfired state. The ceramic honeycomb body may, as described above, be produced by an extrusion process, for example as described in United States Patent No. 3,824,196. The sealing member may be produced using an extrusion die as shown in Figure 7 and Figure 8 having passages 8 to supply a batch material and orifices 9 with portions 10 of the die base material projecting therebetween so as to block the usual channels of the honeycomb structural body in the desired pattern, or a press die having the appropriate shape. Then, the shaped sealing members 5 and 6 are dried and then are cut or finished into the given size and thickness.

The thus formed sealing members 5 and 6 are appropriately positioned and the end faces 4 and 4' of the dried ceramic honeycomb body 1 are adhered thereto using, for example, a paste or slurry of the same ceramic material as used in the manufacture of the ceramic honeycomb body as an adhesive. The portions which serve to adhere the ceramic honeycomb body 1 to the sealing members 5 and 6 are the end faces 4 and 4' of the ceramic honeycomb body 1, so that it is preferable to apply an adhesive to the end faces of the ceramic honeycomb body and, if necessary, an adhesive may be applied to one side of the sealing member.

The adhered or bonded assembly is then fired at an appropriate temperature to give the desired filter.

The sealing portions 5A and 6A of the sealing members 5 and 6 may be variously patterned by appropriate design of a press die or an extrusion die and, particularly when employing an extrusion die, the sealing member may be continuously manufactured. The sealing members shaped by using a press die or an extrusion die can be cut or finished into the desired size at any step of after shaping, after drying or after firing.

It is preferred that after the dried ceramic honeycomb body and sealing members have been bonded with an adhesive, the whole assembly is fired to give a ceramic honeycomb filter, but this is not essential.

For example, the ceramic honeycomb body and the sealing members may each be fired at the appropriate temperature and then mechanically assembled and bonded together, or may be adhered and hardened using an organic adhesive, Portland cement or alumina cement, or fired and bonded using a glass material, or fired and bonded using the same ceramic material as used in the manufacture of the ceramic honeycomb body and the sealing members.

The invention will be further described with reference to the following illustrative Examples. In the examples all parts are by weight unless otherwise specified.

## Example 1

To 100 parts of a ceramic raw material consisting of 38 parts of talc, 40 parts of Kaolin and 22 parts of alumina were added 4 parts by weight of methyl cellulose and sufficient water to give a workable mixture. The mixture was thoroughly kneaded and an oval honeycomb body having a short diameter of 81 mm, a long diameter of 170 mm, a length of 152 mm, a partition wall thickness of 0.30 mm and about 200/inch$^2$ (31/cm$^2$) channels, in cross-section, was produced therefrom by a known extrusion process.

Then a first sealing member having the same outer shape as the ceramic honeycomb body was shaped from the same composition as used for the ceramic honeycomb body by using an extrusion die designed so that the channels at one end face of the ceramic honeycomb body are blocked with sealing portions of the sealing member in a checker flag pattern. Then a similar, second sealing member having the same outer shape as the ceramic honeycomb body was shaped by using an extrusion die designed so that the sealing portions of the first sealing member became openings and the openings of the first sealing member became sealing portions.

These two sealing members were dried and then cut to a thickness of 10 mm and, as shown in Figure 4, each of the dried sealing members were combined, one to each end face of the ceramic honeycomb body, so that one of the sealing members blocked given channels at one end face of the honeycomb structural body and the sealing portions of the other sealing member blocked the remaining channels at the other end face. The ceramic honeycomb body and sealing member were adhered using a paste obtained by mixing a powder of the same composition as used for the ceramic honeycomb body with an appropriate amount of methyl cellulose and water and the adhered assembly was fired at a maximum temperature of 1,400°C for two hours to give a cordierite honeycomb filter having a filter area of about 16,700 cm$^2$.

The pressure drop of the filter was measured using air at room temperature and was found to be 120 mm H$_2$O (1176 Pa) at a flow rate of 4 m$^3$/min.

## Example 2

A ceramic honeycomb filter was produced following the procedure as described in Example 1 except that there was employed as ceramic raw material a mixture of 85 parts of powdered synthetic mullite (less than 250 microns) and powdered clay; the mixture was extruded to give a circular honeycomb body having a diameter of 118 mm and a length of 152 mm (having the same partition wall thickness and number of channels per cm$^2$ as that in Example 1); the sealing members had a thickness of 8 cm; and the assembly of sealing members and honeycomb body was fired at a maximum temperature of 1420°C. The resulting filter had a filter area of 15,500 cm² and a pressure drop, measured as described in Example 1, of 100 mm $H_2O$ (980 Pa) at a flow rate of 4 m³/min.

### Example 3

A mullite honeycomb structural main body and mullite sealing members which have the same quality and shape as those prepared in Example 2 were each fired and then the sealing members were arranged at the end faces of the mullite honeycomb body in the same manner as described in Example 1 and adhered and hardened using an alumina cement added with an appropriate amount of water to give a mullite honeycomb filter.

The pressure drop of the filter, measured as described in Example 1, was 103 mm $H_2O$ (1009 Pa) at a flow rate of 4 m³/min, substantially the same value as in Example 2.

As mentioned above, the available filter area per unit volume of the ceramic honeycomb filters of the invention is high and the partition walls can be made very thin, so that even if a high filtration rate is demanded, a relatively low pressure loss is attained, so that a compact structure can be obtained.

In addition, the filters can be formed of porous ceramic materials having high thermal shock resistance and heat resistance by selecting and combining the ceramic honeycomb structural main body and the sealing member, and ceramic honeycomb filters which can be used at high temperatures and are very stable to sudden temperature change can be obtained. Accordingly, the present invention provides ceramic honeycomb filters which may be used to remove fine particles from high temperature exhaust gases from diesel and other internal combustion engines.

### Claims

1. A ceramic honeycomb filter which comprises a ceramic honeycomb body (1) having a plurality of channels (2) extending from one end face (4) of the body to the other end face (4') thereof, characterized in that ceramic sealing members (5, 6) shaped by means of a press die or an extrusion die are fitted to the said end faces of the ceramic honeycomb body, which sealing members each have sealing portions (5A, 6A), and in that the sealing portions (5A) of one sealing member (5) block given channels (2) at one end face (4) of the ceramic honeycomb body and do not block opening portions of the remaining channels at the same said one end face, and the sealing portions (6A) of the other sealing member (6) block the said remaining channels (2) at the other end face (4') of the body and do not block opening portions of the said given channels at the same said other end face.

2. A ceramic honeycomb filter as claimed in Claim 1, characterized in that the sealing members (5, 6) are adhered to each end face (4, 4') of the ceramic honeycomb body with an adhesive.

3. A ceramic honeycomb filter as claimed in Claim 2, characterized in that the adhesive is an organic adhesive, a glass material or a ceramic material.

4. A method for producing a ceramic honeycomb filter, characterized by comprising fitting a ceramic sealing member (5, 6) shaped by means of a press die or an extrusion die to each of both end faces (4, 4') of a ceramic honeycomb main body (1) having a plurality of channels (2) extending from one end face (4) to the other end face (4') thereof, which sealing members each have sealing portions (5A, 6A), such that the sealing portions (5A) of one sealing member (5) block given channels (2) at one end face (4) of the ceramic honeycomb body and do not block opening portions of the remaining channels at the same said one end face, and the sealing portions (6A) of the other sealing member (6) block the said remaining channels (2) at the other end face (4') of the body and do not block opening portions of the said given channels at the same said other end face.

5. A method as claimed in Claim 4, characterized in that the sealing members (5, 6) are adhered to each end face (4, 4') of the ceramic honeycomb body (1) by means of an adhesive.

6. A method as claimed in Claim 5, characterized in that the adhesive is an organic adhesive, a glass material or a ceramic material.

### Patentansprüche

1. Keramisches Filter mit Wabenstruktur, umfassend einen keramischen Wabenkörper (1) mit einer Vielzahl von Kanälen (2), die von einer Endfläche (4) des Körpers zur anderen Endfläche (4') desselben verlaufen, dadurch gekennzeichnet, daß keramische Abdichtglieder (5, 6), welche mittels einer Preßmatrize oder einer Extrusionsmatrize ausgebildet worden sind, an die Endflächen des keramischen Wabenkörpers angesetzt sind, welche Abdichtglieder Abdichtabschnitte (5A, 6A) aufweisen, und daß die Abdichtabschnitte (5A) eines Abdichtgliedes (5) bestimmte Kanäle (2) an einer Endfläche (4) des keramischen Wabenkörpers blockieren und Öffnungsabschnitte der restlichen Kanäle an derselben Endfläche nicht blockieren, und daß die Abdichtabschnitte (6A) des anderen Abdichtgliedes (6) die verbleibenden Kanäle (2) an der anderen Endfläche (4') des Körpers blockieren und Öffnungsabschnitte der bestimmten Kanäle an derselben anderen Endfläche nicht blockieren.

2. Keramisches Filter mit Wabenstruktur nach Anspruch 1, dadurch gekennzeichnet, daß die Abdichtglieder (5, 6) an jede Endfläche (4, 4') des keramischen Wabenkörpers mit einem Klebstoff angeklebt sind.

3. Keramisches Filter mit Wabenstruktur nach Anspruch 2, dadurch gekennzeichnet, daß der Klebstoff ein organischer Klebstoff, ein Glasmaterial oder ein keramisches Material ist.

4. Verfahren zum Herstellen eines keramischen Filters mit Wabenstruktur, gekennzeichnet durch Ansetzen eines mittels einer Preßmatrize oder einer Extrusionsmatrize ausgebildeten, keramischen Abdichtgliedes (5, 6) an jeder von zwei Endflächen (4, 4') eines keramischen Wabenhauptkörpers (1), welcher eine Vielzahl von Kanälen (2) aufweist, die von einer Endfläche (4) zur anderen Endfläche (4') desselben verlaufen, welche Abdichtglieder jeweils Abdichtabschnitte (5A, 6A) derart haben, daß die Abdichtabschnitte (5A) eines Abdichtgliedes (5) bestimmte Kanäle (2) an einer Endfläche (4) des keramischen Wabenkörpers blockieren und Öffnungsabschnitte der verbleibenden Kanäle an derselben einen Endfläche nicht blockieren, und daß die Abdichtabschnitte (6A) des anderen Abdichtgliedes (6) die genannten verbleibenden Kanäle (2) an der anderen Endfläche (4') des Körpers blockieren und Öffnungsabschnitte der bestimmten Kanäle an derselben anderen Endfläche nicht blockieren.

5. Verfahren nach Anspruch 4, dadurch gekennzeichnet, daß die Abdichtglieder (5, 6) an jede Endfläche (4, 4') des keramischen Wabenkörpers (1) mittels eines Klebstoffes geklebt werden.

6. Verfahren nach Anspruch 5, dadurch gekennzeichnet, daß der Klebstoff ein organischer Klebstoff, ein Glasmaterial oder ein keramisches Material ist.

**Revendications**

1. Filtre céramique en nid d'abeilles qui comprend un corps céramique en nid d'abeille (1) présentant une série de canaux (2) qui s'étendent d'une face d'extrémité (4) du corps à l'autre face d'extrémité (4') de celui-ci, caractérisé en ce que des organes céramiques d'obturation (5, 6), façonnés au moyen d'une matrice à presse ou d'une filière d'extrusion sont montés sur lesdites faces d'extrémité du corps céramique en nid d'abeilles, ces organes d'obturation présentant chacun des portions obturantes (5A, 6A), et en ce que les portions obturantes (5A) d'un organe d'obturation (5) bouchent des canaux donnés (2) sur l'une des faces d'extrémité (4) du corps céramique en nid d'abeilles et ne bouchent pas les parties ouvertes des canaux restants sur la même face d'extrémité, et les portions obturantes (6A) de l'autre organe d'obturation (6) bouchent lesdits canaux restants (2) sur l'autre face d'extrémité (4') du corps et ne bouchent pas les parties ouvertes desdits canaux donnés sur cette même dernière face d'extrémité.

2. Filtre céramique en nid d'abeilles selon la revendication 1, caractérisé en ce que les organes d'obturation (5, 6) adhèrent sur chaque face d'extrémité (4, 4') du corps céramique en nid d'abeilles, au moyen d'un adhésif.

3. Filtre céramique en nid d'abeilles selon la revendication 2, caractérisé en ce que l'adhésif est un adhésif organique, une matière vitreuse ou une matière céramique.

4. Procédé de production d'un filtre céramique en nid d'abeilles, caractérisé en ce qu'il comprend la mise en place d'un organe céramique d'obturation (5, 6), façonné au moyen d'une matrice à presse ou d'une filière d'extrusion, sur chacune des deux faces d'extrémité (4, 4') d'un corps céramique principal en nid d'abeilles (1) comportant une série de canaux (2) qui s'étendent d'une face d'extrémité (4) à l'autre face d'extrémité (4') de celui-ci, ces organes d'obturation comprenant chacun des portions obturantes (5A, 6A) de telle façon que les portions obturantes (5A) d'un organe d'obturation (5) bouchent des canaux donnés (2) sur une face d'extrémité (4) du corps céramique en nid d'abeilles et ne bouchent pas les parties ouvertes des canaux restants sur la même face d'extrémité, et que les portions obturantes (6A) de l'autre organe d'obturation (6) bouchent lesdits canaux restants (2) sur l'autre face d'extrémité (4') du corps et ne bouchent pas les parties ouvertes desdits canaux donnés sur cette même dernière face d'extrémité.

5. Procédé selon la revendication 4, caractérisé en ce que les organes d'obturation (5, 6) sont amenés à adhérer sur chaque face d'extrémité (4, 4') du corps céramique en nid d'abeilles (1), au moyen d'un adhésif.

6. Procédé selon la revendication 5, caractérisé en ce que l'adhésif est un adhésif organique, une matière vitreuse ou une matière céramique.

## FIG.1

## FIG.2

# FIG. 3

# FIG. 4

## FIG. 5

## FIG. 6

# FIG.7

# FIG.8